# DEMANDE DE BREVET EUROPEEN

(11) **EP 4 765 679 A1**
(43) Date de publication de la demande: **24.06.2026**
(21) Numéro de dépôt: 25223971.0
(22) Date de dépôt: 16.12.2025
(51) Int. Cl.: H04B 10/118, H04B 10/70

(54) **SYSTÈME DE RÉCEPTION QUANTIQUE**

(30) Priorité: 20.12.2024 FR 2414858
(71) Demandeur: THALES, 92190 Meudon (FR)
(72) Inventeur: LELOUP, Valentin, 31037 TOULOUSE CEDEX 1 (FR); FAUGERON, Mickael, 31037 TOULOUSE CEDEX 1 (FR); LAZZARINI, Luca, 31037 TOULOUSE CEDEX 1 (FR); DE FORGES DE PARNY, Laurent, 31037 TOULOUSE CEDEX 1 (FR); LABORDE, Cyrille, 06156 CANNES LA BOCCA CEDEX (FR)
(74) Mandataire: Lavoix

(57) **Abrégé**

La présente invention concerne un système de réception quantique comprenant un premier récepteur optique (102), le premier récepteur optique (102) comprenant un premier télescope (107). Le système de réception quantique comprend de plus un second récepteur optique (102) et le second récepteur optique (102) comprenant un second télescope (107). Chaque récepteur (102) communique à une unité de traitement (103) les signaux détectés par un analyseur quantique (104) et l'unité de traitement (103) combinant les signaux détectés. Le premier récepteur optique (102) et le second récepteur optique (102) comprennent de plus respectivement une première monture et une seconde monture (110) pour orienter le premier et le second télescope (107), et chaque télescope (107) du système de réception est orienté selon une direction propre de réception de photons.

## Description

La présente invention concerne les systèmes de télécommunications par satellites et plus particulièrement les télécommunications quantiques par voie optique. La transmission est faite entre deux dispositifs, par exemple un satellite artificiel en orbite autour d'une planète, typiquement la terre, et un dispositif au sol.

Les communications quantiques se basent sur des échanges de photons entre un émetteur et un récepteur. Idéalement, cet échange est de l'ordre de quelques photons émis par une source laser à très faible puissance. En pratique, l'émission d'un unique photon est complexe, et une source laser émettant quelques photons cohérents ou paires de photons intriqués est employée dans les transmissions quantiques.

La transmission de plusieurs photons, sous la forme d'un paquet de plusieurs photons ou de plusieurs paquets de plusieurs photons ou de manière équivalente d'une impulsion d'onde électromagnétique par exemple, met néanmoins en péril la sécurité réelle d'une communication pourtant voulue sécurisée entre l'émetteur et le récepteur.

D'après les lois de la mécanique quantique, la mesure d'un état d'une particule ou d'un photon modifie l'élément mesuré. Ainsi, lorsqu'une émission comprend un paquet de photons plutôt qu'un unique photon, une tierce personne peut alors intercepter des photons, sans pour autant couper la communication ou informer l'émetteur et le récepteur de l'interception, puisque certains photons ne sont pas interceptés.

Ainsi, pour sécuriser des communications quantiques, divers protocoles ont été mis au point et certains reposent sur l'utilisation de plusieurs signaux à des intensités variables et dont uniquement une partie, souvent un seul photon, est utile à l'échange. Les autres signaux sont alors considérés comme des leurres pour une tierce personne qui souhaite avoir accès à l'échange sécurisé.

D'autres protocoles sont basés sur l'intrication quantique en utilisant des paires de photons intriqués. L'envoie de paires multiples est problématique, car il faut être sûr que les deux photons mesurés soient ceux d'une même paire. Cependant, lorsque plusieurs paires de photons sont envoyées, il n'est pas certains que les photons mesurés soient de la même paire. Les protocoles basés sur l'intrication ont aussi des applications pour les réseaux d'information quantique.

De tels protocoles reposent toujours sur l'échange d'un nombre restreint de photons par une source émettant à une faible puissance. Cette contrainte influe sur les équipements d'émission et de réception pour effectuer les transmissions. Lorsque l'émetteur est compris dans un satellite, la masse de la charge utile d'émission quantique est une contrainte importante, l'émetteur devant en outre être résistant à un lancement.

De plus, s'agissant spécifiquement de communications impliquant un émetteur embarqué dans un satellite artificiel, l'accès limité à l'émetteur en orbite est fortement contraignant et ne permet pas d'adapter le système lors d'une défaillance de celui-ci voire même de procéder à un changement de paramètres de transmission. Les systèmes de réception, au sol, sont donc adaptés pour faire face aux limites imposées par les émetteurs.

Les systèmes de réception comprennent en général des télescopes optiques avec de grands diamètres, pouvant dépasser un mètre cinquante, et reliés optiquement à des détecteurs de photons. Le télescope collecte les photons et ces derniers sont guidés grâce aux éléments optiques du télescope et également des guides d'onde optiques jusqu'à un analyseur quantique comprenant en général au moins deux détecteurs de photons.

Le détecteur de photon émet alors un signal lorsqu'un photon est détecté, passant d'une réception d'un photon à un signal déterministe lié au détecteur. Le signal de détection, qui peut-être un signal électrique, est transmis à des unités de traitements par l'analyseur quantique. L'analyseur quantique permet ainsi en fonction de la détection des photons par les détecteurs de transmettre un signal de détection, dépendant du détecteur, et donc d'être en mesure de discriminer les photons qui sont détectés. Cette discrimination peut être liée aux optiques en amont des détecteurs qui peuvent orienter les photons en fonction de leur polarisation par exemple sur un détecteur plutôt qu'un autre. De ce fait l'analyseur quantique permet, à partir de la collecte du photon par le système et de sa détection par la suite, de déterminer l'état quantique du photon transmis pour la communication.

En pratique, les systèmes de réception sont généralement dérivés des systèmes d'observation astronomique. Puisque le signal reçu contient peu de photons, la surface collectrice des récepteurs doit être la plus importante possible. L'augmentation de la surface collectrice par une augmentation du diamètre du télescope est difficile, les éléments optiques de grandes tailles étant complexes à réaliser sans défaut, couteux et complexe à implémenter et opérer. En outre, le faible nombre de photons transmis requiert des temps d'acquisition longs, de quelques minutes à plusieurs jours pour un faible débit. Dans le cadre d'un établissement quantique de clés dans des protocoles de communication sécurisée, ce faible débit restreint le nombre de clés établies.

L'utilisation de grands télescopes pour la réception du signal est de plus contraignante de par leur envergure et par l'installation d'éléments complémentaires comme, par exemple, une coupole. De plus dans le cas de satellites défilants il faut être capable de suivre le défilement du satellite. Ces dispositifs sont difficilement adaptables en fonction du flux que l'on souhaite recevoir, il n'est donc pas aisé de modifier, du côté du récepteur, les paramètres d'une transmission avec un satellite.

Le but de l'invention est alors de proposer un système de télécommunication quantique par satellite permettant d'augmenter le débit de transmission et de réduire le temps d'acquisition. La surface collectrice assurant la réception des photons est augmentée tout en réduisant l'encombrement du système de réception.

A cet effet, l'invention a pour objet un système de réception quantique comprenant un premier récepteur optique, le premier récepteur optique comprenant un premier télescope. Le système de réception quantique comprend de plus un second récepteur optique, le second récepteur optique comprenant un second télescope. Chaque récepteur optique communique à une unité de traitement des signaux détectés et l'unité de traitement combinant les signaux détectés. Le premier récepteur optique et le second récepteur optique comprennent de plus respectivement une première monture et une seconde monture pour orienter le premier et le second télescope et chaque télescope du système de réception est orienté selon une direction propre de réception de photons

Le système de réception quantique, parce qu'il comprend deux récepteurs optiques, ou plus, chacun comprenant un télescope, offre une plus grande surface collectrice de photons. Chacun des télescopes peut être muni d'un analyseur quantique distinct ou pouvant partager son analyseur quantique avec un autre télescope.

Chacun des récepteurs étant pourvu d'un télescope les récepteurs collectent des photons de manière indépendante. Les photons sont collectés par les télescopes, et les analyseurs quantiques détectent les photons par le biais de détecteurs de photons. Les analyseurs transmettent un signal de détection à une unité de traitement commune. L'unité de traitement assure et centralise ainsi le traitement de l'information pour la communication quantique opérée.

Ainsi, parce que le système comprend plusieurs télescopes et plusieurs analyseurs quantiques, le débit de la communication quantique est amélioré pour un coût moindre.

Le système ainsi défini offre une grande surface collectrice de photons et une résilience face à une défaillance matérielle.

L'invention concerne également un procédé de réception quantique mettant en œuvre un système de réception quantique tel qu'évoqué, et comprend avantageusement, mais obligatoirement, une étape de pointage des récepteurs optiques. Le procédé comprend une étape de pointage et de suivi durant laquelle le premier récepteur émet un signal de pointage vers un satellite et des récepteurs du système étant actifs en réception et reçoivent un signal de pointage de la part du satellite, les télescopes des récepteurs actifs ayant reçu le signal de pointage sont orientés selon le signal de pointage du satellite.

Suivant d'autres aspects avantageux de l'invention, le système de réception quantique comprend une ou plusieurs des caractéristiques suivantes, prises isolément ou suivant toutes les combinaisons techniquement possibles.

Dans un mode de réalisation, le premier récepteur optique comprend de plus un dispositif de pointage, le dispositif de pointage émet un signal à destination d'un satellite, le récepteur optique reçoit un signal de pointage du satellite et la monture du télescope du récepteur orientant le télescope selon le signal de pointage.

Dans un mode de réalisation, le système comprend de plus un analyseur quantique, l'analyseur quantique étant optiquement lié à au moins un des télescopes du système.

Dans un mode de réalisation, le système comprend de plus un cryostat pour refroidir un ensemble de détecteurs de photons partagés par les deux télescopes.

Dans un mode de réalisation, les télescopes des récepteurs optiques sont équipés d'un système de compensation des perturbations atmosphériques pour la réception des photons.

Dans un mode de réalisation, les récepteurs optiques comprennent de plus chacun un système de datation pour la détermination d'une date d'émission et éventuellement la date d'arrivée du photon, le système de datation transmettant la date d'émission et éventuellement la date d'arrivée du photon à l'unité de traitement.

Dans un mode de réalisation, chaque récepteur optique du système est composé d'au moins deux télescopes, les au moins deux télescopes étant chacun associé à un analyseur quantique et à une monture de télescope commune pour les orienter de manière commune.

Dans un mode de réalisation, l'analyseur quantique comprend une lame optique, la lame recevant des photons de deux sources distinctes.

Dans un mode de réalisation, deux récepteurs optiques du système forment une paire, et la lame optique d'un analyseur quantique de la paire est un séparateur de faisceau polarisé, l'analyseur quantique comprend de plus une paire de détecteurs de photons, le séparateur de faisceau polarisé divisant un faisceau de photons en deux pour diriger des lumières polarisées sur les détecteurs de l'analyseur quantique.

Dans un mode de réalisation, le système comprend un ensemble de récepteurs optiques, les récepteurs de l'ensemble étant distants les uns des autres, chacun séparé par une distance prédéterminée et organisés selon un motif en des cercles concentriques.

L'invention permet donc d'obtenir un système modulaire, en fonction du nombre de récepteurs optiques employés, avec une grande capacité de réception de photons. En outre, l'emploi d'un cryostat pour les détecteurs de plusieurs analyseurs quantiques et l'utilisation de deux détecteurs de photons par analyseur quantique réduisent grandement le coût d'installation et de maintenance d'un tel système. Le système peut ainsi être déployé facilement et à moindre coût.

En outre, les analyseurs quantiques peuvent être reliés à deux télescopes, ou un télescope et une seconde source à l'aide d'une lame optique permettant d'obtenir deux entrées optiques dans l'analyseur quantique. Cette seconde source, pouvant être un dispositif de tests ou de calibrages, ce qui facilite la mise en place et la maintenance du système.

Cette lame optique pouvant être une lame séparatrice telle qu'un séparateur de faisceau polarisé.

L'invention apparaîtra plus clairement à la lecture de la description qui va suivre, donnée uniquement à titre d'exemple non limitatif, et faite en référence aux dessins dans lesquels :
[Fig. 1] la figure 1 est schéma d'un système de réception quantique selon l'invention ;
[Fig. 2] la figure 2 est une représentation d'une étape de pointage et de suivi selon un mode de réalisation de l'invention ;
[Fig. 3] la figure 3 est une représentation d'architecture et de placement de récepteurs d'un système de réception quantique selon l'invention ;
[Fig. 4] la figure 4 est une seconde représentation d'architecture et de placement de récepteurs selon l'invention ;
[Fig. 5] la figure 5 représente un schéma d'utilisation des récepteurs selon un mode de réalisation de l'invention ;
[Fig. 6] la figure 6 est un système de réception quantique comprenant deux télescopes par monture selon un mode de réalisation de l'invention ;
[Fig. 7] la figure 7 est un schéma d'un analyseur quantique selon l'état de l'art employé dans un mode de réalisation de l'invention;
[Fig. 8] la figure 8 est un schéma d'analyseurs quantiques selon un mode de réalisation de l'invention.

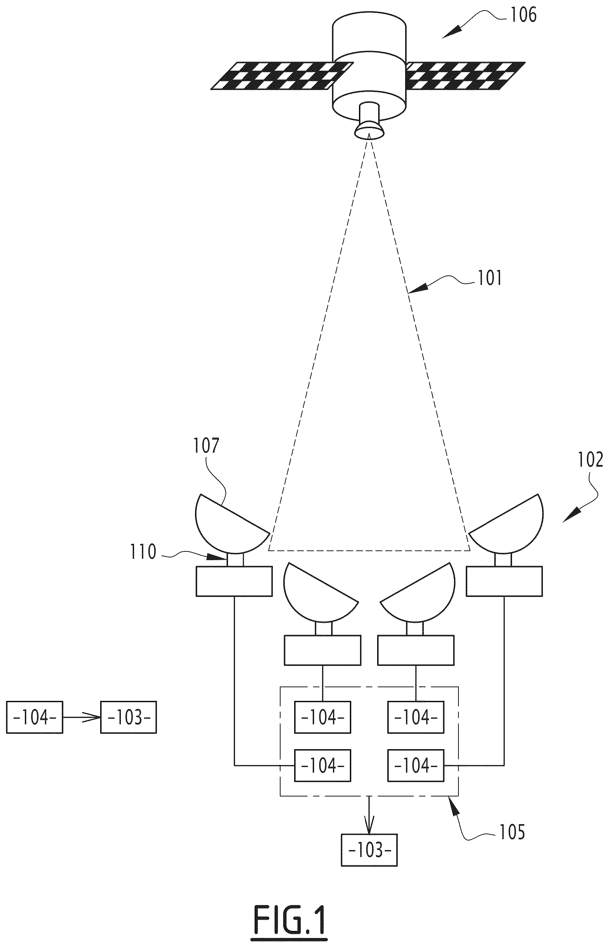

[Fig. 1] La figure 1 est un schéma d'un système de réception quantique selon un mode de réalisation de l'invention. Le système comprend au moins deux récepteurs optiques 102, ici quatre récepteurs 102 sont représentés, chacun relié à un analyseur quantique 104 distincts, selon le mode de réalisation ici présenté. Les récepteurs optiques 102 sont séparés d'une distance prédéterminée, cette distance est très inférieure à la distance qui sépare le système d'un émetteur, par exemple un satellite 106. Le système de communication est au sol, par opposition à un satellite 106 émettant en altitude. L'ensemble de récepteurs optiques 102 comprend un télescope 107 et une monture 110 permettant d'orienter le télescope 107 pour recevoir les photons émis par le satellite 106. Les télescopes 107 étant chacun équipés d'une monture 110 distincte, ils peuvent être orientés dans des directions différentes afin de recevoir les photons. La monture 110 permet également de suivre le satellite 106 durant son mouvement et ainsi maximiser le nombre de photons reçus lors d'une transmission.

Le satellite 106 émet un faisceau 101 de photons, le faisceau 101 divergeant en fonction de la distance du satellite 106, il illumine les récepteurs optiques 102 au sol. Les récepteurs optiques 102 comprennent en outre un analyseur quantique 104 permettant à partir de la réception d'un photon par le télescope 107, de générer un signal de détection. La détection s'effectue selon la polarisation du photon émis par le satellite 106 et reçu par le récepteur 102.

Chaque analyseur quantique 104 comprend au moins deux détecteurs de photons uniques capables de détecter un unique photon. L'analyseur quantique 104 ou chaque détecteur de l'analyseur quantique transmet ensuite un signal de détection à une unité de traitement 103 si le détecteur de photons reçoit un photon. L'unité de traitement 103 est en lien avec tous les récepteurs optiques 102. L'unité de traitement 103 peut ensuite reconstituer un bit à partir du signal de détection et établir l'information portée par le photon. Cette détermination du bit transmis s'effectue à partir des signaux de détection reçus par l'unité de traitement 103, les signaux étant générés par les analyseurs quantiques 104 selon, par exemple, l'état quantique du photon reçu.

Les analyseurs quantiques 104 sont optiquement liés aux télescopes 107. Les photons reçus par le télescope 107 sont directement transmis au analyseur quantique 104 associé. La liaison optique peut être par un couplage optique direct entre le télescope 107 et l'analyseur quantique 104 associé. La liaison peut aussi être au travers d'une chaîne optique en espace libre ou un guide d'onde optique comme de la fibre optique.

Les récepteurs optiques 102 peuvent aussi comprendre un système de datation des détections de photons. Ces dateurs permettent à partir du temps de détection du photon de déterminer le temps correspondant d'émission du photon par le satellite 106. Cette information est transmise à l'unité de traitement 103 et permet de reconstituer l'information transmise par le satellite 106 dans le cadre de la transmission.

L'ensemble des détecteurs d'un analyseur quantique 104 du système peut nécessiter d'être refroidi par un cryostat 105 afin de maintenir des performances de détection optimale, et notamment pour diminuer le bruit thermique. Le cryostat 105 peut être unique, commun à l'ensemble du système 100, ou partagé par plusieurs selon les capacités du cryostat.

Les télescopes 107 peuvent être des télescopes de type Cassegrain ou Ritchey-Chrétien. Les montures 110 qui soutiennent et orientent les télescopes 107 peuvent être manœuvrées mécaniquement ou par des systèmes électromécaniques. La direction d'orientation d'un télescope 107 est définie par son emplacement au sol et par la position du satellite 106 lors de la transmission, ainsi chaque télescope 107 peut avoir une orientation différente. Les télescopes 107 peuvent de plus être équipés d'un système de compensation des perturbations atmosphériques tel que des éléments d'optique adaptative. Ce système de compensation a pour but de réduire l'impact négatif des perturbations lors de la propagation du photon dans le milieu turbulent de l'atmosphère.

La réception de photons par le système de réception quantique est optimisée par la présence de multiples récepteurs optiques 102. Ainsi chacun des récepteurs 102 ayant une monture propre, il lui est possible de suivre de manière indépendante le satellite. De plus cela rend le système résiliant aux pannes et permet d'augmenter la probabilité de réception d'un photon par le système 100.

En outre, les multiples récepteurs optiques 102 permettent d'augmenter la surface collectrice du système sans employer de télescope 107 de plus grande envergure. Cela simplifie la mise en place d'un tel système ainsi que son adaptabilité pour des transmissions selon des paramètres systèmes différents. Il est en effet possible d'activer ou non des récepteurs 102 pour certaines transmissions, et donc de modifier le débit du lien.

Dans un mode de réalisation alternatif, les analyseurs quantiques 104 sont communs à plusieurs télescopes 107.

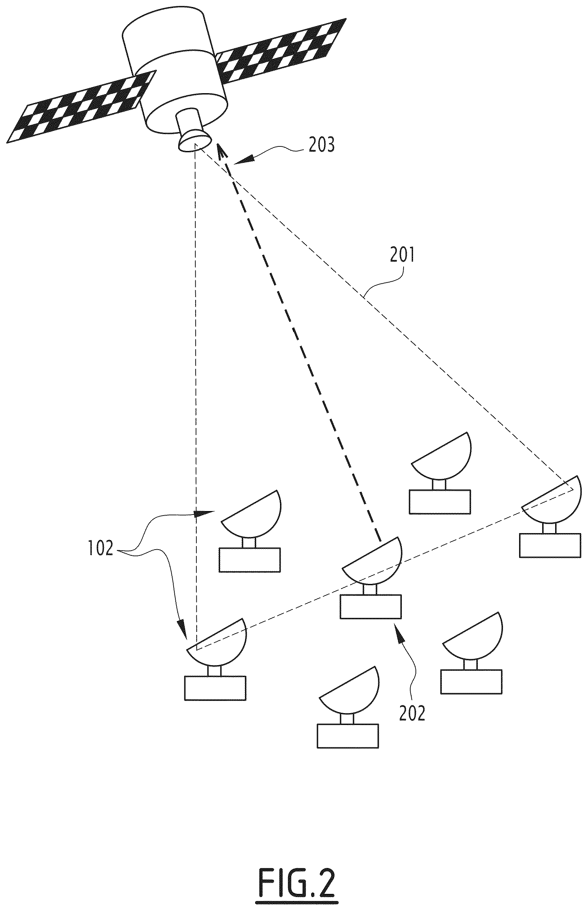

[Fig. 2] La figure 2 est une représentation de l'étape de pointage et de suivi selon l'invention. Le système de réception quantique comprend plusieurs récepteurs optiques 102 au sol, par opposition à un émetteur satellite en altitude. Le système peut cependant se trouver sur une plateforme mobile, ou surélevé. Les récepteurs optiques 102 sont distants les uns des autres, par une distance prédéterminée très inférieure à la distance séparant le système d'un émetteur. Les récepteurs 102 sont organisés de telle façon qu'un récepteur 202 se trouve au centre de l'ensemble des récepteurs 102 pour établir le pointage et récupérer le maximum du flux descendant lors de la communication.

La disposition de l'ensemble des récepteurs 102 ici représentée est circulaire avec un récepteur 202 central, celui qui émet le signal de pointage 203 du sol vers le satellite. Cette disposition n'est cependant pas la seule envisageable. De manière préférentielle, le récepteur 102 qui émet le signal de pointage 203 doit être le plus proche du centre de l'ensemble des récepteurs 102, quelle que soit la configuration et la disposition des récepteurs 102.

L'ensemble des récepteurs 102 du système peuvent être actifs lors d'une transmission, ou seulement une partie. La disposition de l'ensemble des récepteurs 102 est donc modifiées par l'activation ou non de récepteurs 102.

Le signal 203 est émis par un dispositif de pointage du récepteur 202, le signal 203 peut être un signal optique ou radio, à destination du satellite. Il peut être de faible ou forte intensité.

Le signal montant 203 est reçu par le satellite 106 qui émet lui aussi un signal de pointage 201, cette fois-ci descendant. Le signal de pointage descendant 201 s'étale en fonction de la distance du satellite et des récepteurs 102, le faisceau du signal de pointage 201 devenant ainsi plus large. Le signal 201 est reçu par le récepteur ayant émis le signal montant 203 et puisque le faisceau s'élargit, il illumine de plus tous les récepteurs 102 actifs lors de la transmission.

Chacun des récepteurs 102 peut alors s'orienter selon le signal de pointage 201 reçu. Les montures 110 de chaque télescope 107 permettent de les orienter de manière indépendante. L'orientation du télescope 107 dépend de la position dans le ciel du satellite ainsi que la position du télescope au sol par rapport au satellite. Ainsi lors du mouvement du satellite 106 dans le ciel, chaque télescope 107 peut suivre le satellite et augmenter la probabilité de réception d'un photon.

Les signaux de pointage 203 et 201 sont émis de manière continue ou discontinue afin de permettre un pointage rapide et efficace lorsque le satellite est visible par les récepteurs 102.

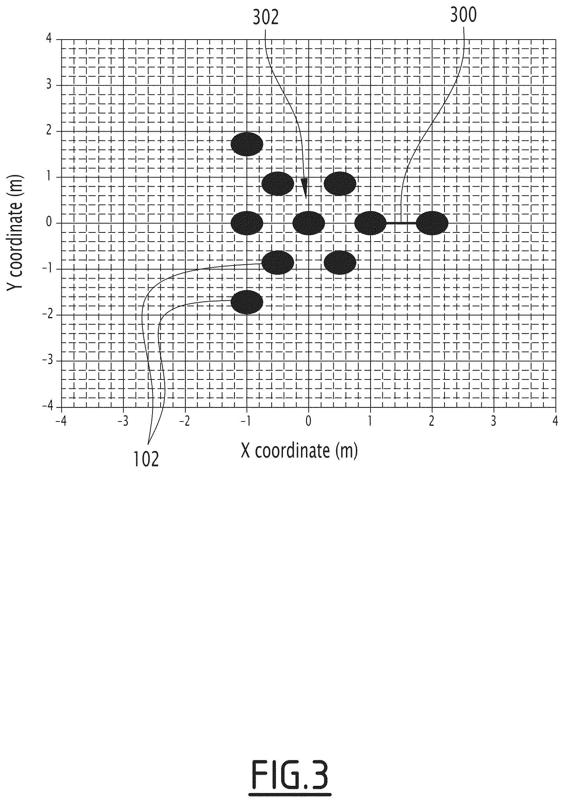

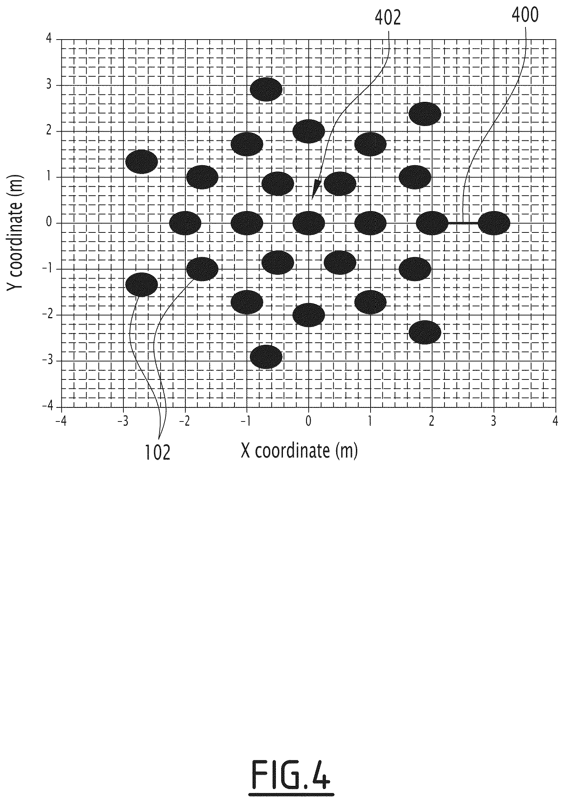

[Fig.3] [Fig. 4] La figure 3 et la figure 4 sont des représentations d'un possible placement de récepteurs d'un système réception quantique selon l'invention.

La figure 3 représente le placement de dix récepteurs optiques 102, disposés selon un cercle de six récepteurs 102. Chacun des récepteurs 102 est séparé des autres par une distance 300 prédéterminée. Les récepteurs 102 forment alors un maillage de récepteurs 102 au sol. La distance 300 est faible devant la distance séparant l'ensemble des récepteurs 102 d'un émetteur, par exemple un satellite.

Un récepteur est au centre d'un premier cercle et trois récepteurs sont disposés en dehors du cercle, selon un second cercle de diamètre supérieur au premier cercle. De telle sorte qu'ils forment un ensemble de deux cercles concentriques. Un récepteur 302 est disposé au centre des cercles des récepteurs 102.

Le récepteur central 302 émet le signal de pointage 203 en direction du satellite avec lequel les récepteurs 102 sont en communication. Comme il est disposé au centre des autres récepteurs 102, lorsque le satellite émet son signal de pointage 201 descendant, le faisceau visant ce récepteur 302 illumine une majorité, voire l'entièreté, des récepteurs 102 autour. Cette illumination est due à l'élargissement du faisceau de photons émit par le satellite et permet, en outre, que les récepteurs 102 puissent recevoir par la suite le signal émis par le satellite lors de la communication.

La figure 4 présente une seconde disposition de récepteurs optiques 102 comprenant vingt-six récepteurs optiques 102 organisés en cercle concentriques. Un récepteur 402 se trouve au centre des cercles concentriques. Les récepteurs optiques 102 sont séparés les uns des autres par une distance 400. Cette distance 400 est faible devant la distance séparant l'ensemble de récepteurs 102 et d'un émetteur. Les récepteurs 102 étant séparés par la distance 400, la distance 400 est un maillage permettant de définir la disposition. En faisant varier la distance 400, la disposition des récepteurs 102 est modifiée, créant des systèmes de réception plus ou moins compacts.

De la même manière que dans la figure 3, le récepteur central 402 émet le signal de pointage 203, de telle sorte que lorsqu'un satellite émet dans sa direction, le faisceau étalé illumine les autres récepteurs 102 autour.

Les dispositions représentées en figure 3 et 4 ne constituent pas les seules dispositions envisagées. De plus, un système peut être constitué de télescopes de différentes tailles, pouvant créer des configurations particulières en fonction de la taille de télescopes.

Les récepteurs 102 peuvent être organisés selon des motifs triangulaires ou des formes géométriques polygonales. Un des récepteurs 102 se trouvent au centre ou au plus proche du centre d'une disposition, quelle que soit la forme, pour l'émission du signal de pointage 203.

De plus, l'ensemble des récepteurs 102 peut être actif lors d'une communication, ou une partie seulement. Dans ce cas, la disposition des récepteurs 102 actifs est différente.

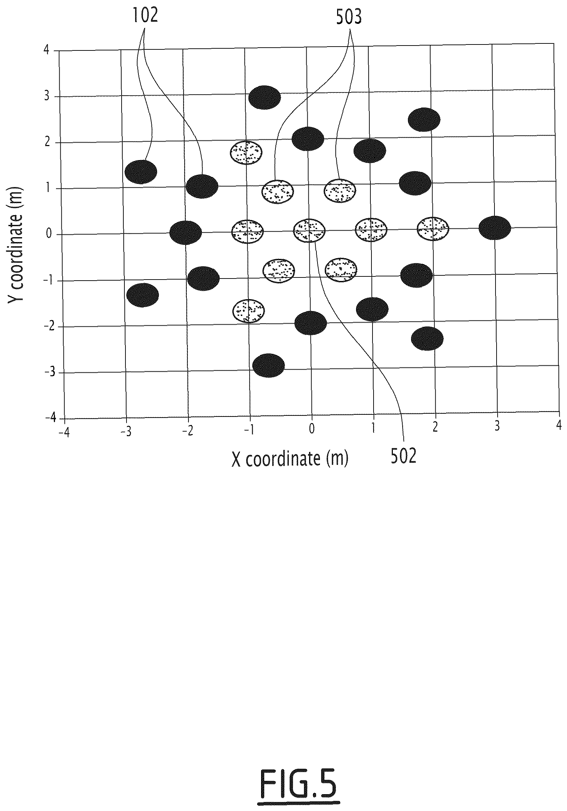

[Fig. 5] La figure 5 représente un schéma d'utilisation des récepteurs selon un mode de réalisation de l'invention. Le système de réception quantique représenté est dans une configuration similaire à celui de la figure 4. Il comprend vingt-six récepteurs optiques 102 organisés en trois cercles concentriques. L'ensemble comprend de plus un récepteur optique centrale 502.

Les récepteurs optiques 102 sont séparés par une distance 400, créant un maillage de récepteurs optiques 102. Cette distance 400 est considérée comme la distance minimale entre deux récepteurs optiques 102.

Un sous-ensemble de dix récepteurs 503 parmi les vingt-six sont actifs lors d'une transmission. Le récepteur central 502 est parmi les récepteurs actifs 503 et émet le signal de pointage 203 pour une transmission avec un satellite. Le satellite émet lui aussi un signal de pointage 201 à destination des récepteurs actifs 503 de la transmission.

L'activation ou non de récepteurs 102 pour une transmission dépend de plusieurs critères tels que le débit nécessaire à la transmission. Il est donc aisé de changer le débit en fonction du nombre de récepteurs 503 actifs. En outre, cela permet notamment en fonction de la disposition des récepteurs 503 de s'adapter à des émissions provenant de plusieurs satellites différents. Chacune des transmissions ayant ses propres caractéristiques, il devient possible avec un seul système d'avoir des transmissions différentes en fonction des différentes activations des récepteurs optiques 102.

L'activation des récepteurs 503 forment dans certains cas un motif différent de celui de la disposition physique des récepteurs optiques 102. Un récepteur 102 se trouve toujours au centre, ou proche du centre, du motif formé par les récepteurs 503 actifs. Le récepteur central est celui qui émet le signal de pointage 203, ainsi, plusieurs récepteurs optiques 102 peuvent comprendre un dispositif de pointage en fonction des motifs d'activation envisagés. De telle sorte que pour chaque transmission avec un motif d'activation différent, il y ait un signal de pointage émis par un récepteur optique 102 au sol, proche du centre du motif. Ainsi, lors de l'émission par un satellite d'un faisceau de photons pointé en direction du récepteur central, les récepteurs actifs autour du récepteur ayant émis le signal de pointage 203 sont aussi illuminés par le faisceau.

L'activation de certains récepteurs optiques 102 permet par ailleurs de modifier la distance entre deux récepteurs optiques 102. Cette nouvelle distance est supérieure à la distance minimale 400 et permet de faire varier le maillage de récepteurs 102 sans modification de la disposition physique des récepteurs 102, par la simple activation lors d'une communication.

En outre, l'activation ou non de certains récepteurs permet de limiter le débit ou de l'augmenter dans le temps en fonction de la disponibilité physique des éléments subissant des aléas tels que des pannes.

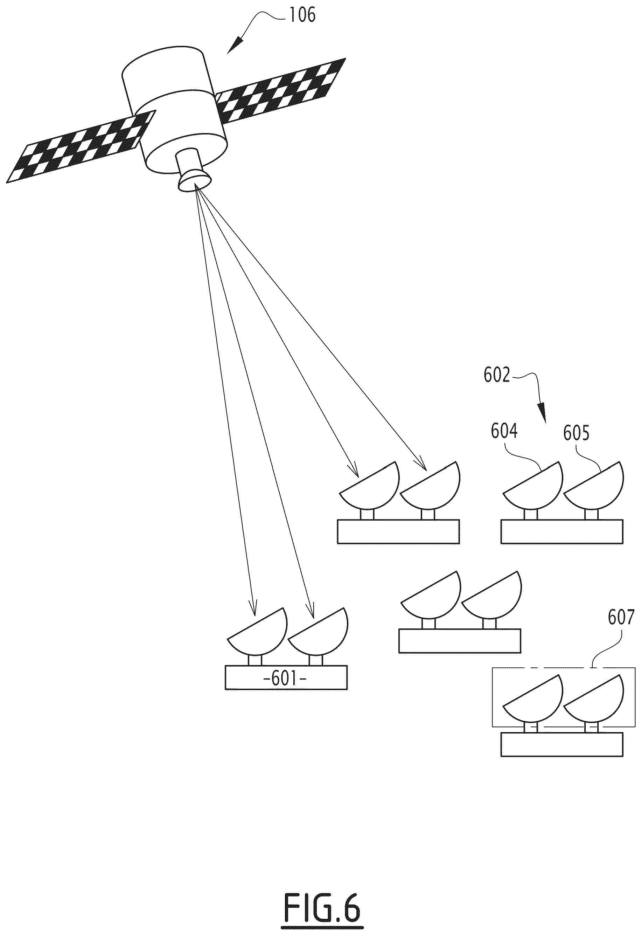

[Fig. 6] La figure 6 est un système de réception quantique comprenant deux télescopes par monture selon un mode de réalisation de l'invention. Le système 600 est en communication avec un satellite 106 émettant des flux de photons en direction des récepteurs optiques 602 du système 600.

Les récepteurs optiques 602 comprennent chacun deux télescopes 604-605 formant un récepteur optique à deux télescopes 607 partageant une même monture. Ces télescopes peuvent intégrer un module d'optique adaptative, pour augmenter la capacité de réception du télescope 604-605. Les télescopes 604-605 sont soutenus et mis en mouvement par une monture distincte pour chacune des paires de télescopes 604-605.

Le télescope 604 est de plus optiquement lié à un analyseur quantique, non représenté sur la figure 6. L'analyseur quantique comprend au moins deux détecteurs de photons capables de détecter un unique photon. La liaison optique entre le télescope 604 et l'analyseur quantique peut être un couplage optique direct ou une chaîne optique, comprenant notamment des fibres optiques.

Dans un mode de réalisation, chacun des télescopes 604-605 peut être optiquement lié à un unique analyseur quantique, distinct pour les deux télescopes d'une paire. En outre, dans d'autres modes de réalisation, l'analyseur quantique est apte à recevoir des photons de deux télescopes, et l'analyseur quantique peut être commun aux deux télescopes 604-605.

Les détecteurs des analyseurs quantiques d'un même récepteur 602 peuvent nécessiter d'être refroidis par un ou plusieurs cryostat(s). Plusieurs récepteurs 602 peuvent partager un cryostat commun pour réduire les coûts d'installation et de maintenance du système tout en conservant de bonnes capacités de détection de photons.

Les télescopes 604 et 605 d'un récepteur 602 reçoivent des photons du satellite 106, et les détecteurs de photons du récepteur 602 détectent les photons reçus. Le récepteur optique 602, lorsqu'un photon est détecté, transmet un signal à l'unité de traitement. L'ensemble des récepteurs optique 602, chacun équipé de deux télescopes 607 transmettent les signaux de détection à la même unité de traitement, non représentée sur la présente figure.

Chaque paire de télescopes 604-605 est donc capable d'effectuer une détection de manière indépendante. De cette façon, un récepteur optique 602 a une surface collectrice de photons qui est doublée.

De cette façon, pour une même surface, il est possible de concentrer un plus grand nombre de télescopes et donc d'obtenir une surface collectrice de photons plus importante. Le débit d'une transmission étant notamment défini par le nombre de récepteurs 602 disponibles pour une communication, l'augmentation du nombre de télescope 604-605 permet d'augmenter le débit du système 600.

Le système 600 n'est pas limité à deux télescopes par monture et peut comprendre N télescopes par monture. Les N télescopes sont alors orientables de manière commune.

Le système 600 peut de plus être déployé sur des surfaces plus restreinte tout en préservant la qualité de transmission et le débit de celle-ci.

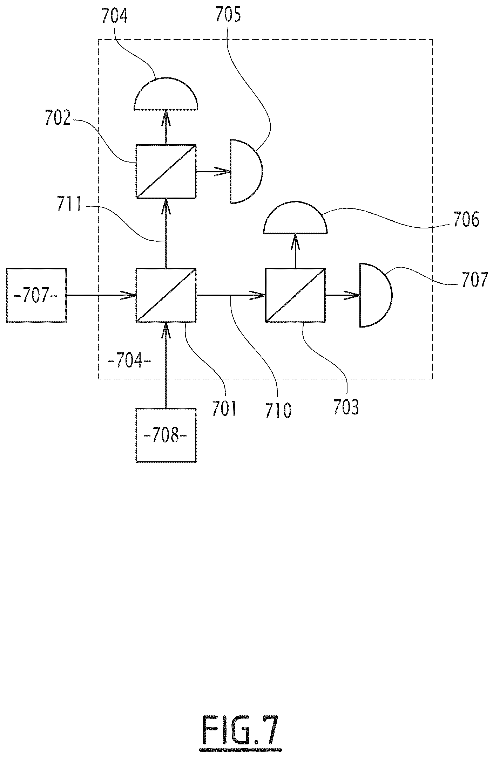

[Fig. 7] La figure 7 est un schéma d'un analyseur quantique selon l'état de l'art employé dans un mode de réalisation de l'invention. L'analyseur quantique 704 représenté est utilisé dans un système de réception selon l'invention et comprend un séparateur de faisceau non polarisant 701, deux séparateurs de faisceau polarisant 702-703 et quatre détecteurs de photons uniques 704-707. L'analyseur quantique 704 est optiquement lié à un télescope 707, par des guides d'ondes par exemple une fibre optique.

Lors d'une communication quantique utilisant la polarisation des photons pour transmettre des informations, tels que décrit par des protocoles de communications quantiques comme BB84 (Bennett-Brassard 1984), il est nécessaire d'avoir autant de détecteur de photons qu'il existe de polarisations différentes. L'analyseur quantique 104 comprend donc quatre détecteurs de photons 704-707 afin de pouvoir détecter correctement les photons selon leur polarisation.

L'analyseur quantique 704 est compris dans un récepteur optique. Plus particulièrement, il assure la détection d'un photon par le récepteur. Chaque détecteur d'un analyseur quantique 704 peut nécessiter d'être refroidi par un cryostat non représenté sur la figure 7. Le cryostat pouvant être commun à un ou plusieurs analyseurs quantiques 704 et garantit des conditions de détection optimale.

Le séparateur de faisceau non polarisant est par exemple une la lame séparatrice 701 qui reflète une partie du faisceau reçu en un premier faisceau en direction d'un premier séparateur de faisceau polarisé 702. La seconde partie du faisceau qui n'est pas reflétée par la lame séparatrice est transmise directement en direction d'un second séparateur de faisceau polarisé 703. Les photons sont ainsi soit reflétés soit transmis selon une probabilité, par exemple 50%, rendant la transmission ou la réflexion équiprobable.

Les séparateurs de faisceau polarisé 702-703 assurent, tout comme la lame séparatrice 701, la division du faisceau reçu en deux soit en le reflétant soit en le laissant passer au travers du séparateur. Une telle séparation est faite selon la polarisation des photons qui composent le faisceau. Une partie des photons 710 est ainsi reflétée sur le détecteur 706 et l'autre transmise directement au détecteur 707. De la même manière, un photon 911 est transmis au détecteur 704 ou reflété au détecteur 705 selon sa polarisation.

L'analyseur quantique 704 comprend de plus un système de datation des photons non représenté sur la figure 7. Lorsque le photon est reçu par le télescope 707, puis détecté par l'analyseur quantique 704, le dateur de photon assure l'estimation du temps d'arrivée du photon détecté. Il est alors possible à partir de ce temps d'arrivée de déterminer le temps d'émission par un émetteur tel qu'un satellite en prenant en compte les effets de propagation.

L'analyseur quantique 704 comprend de plus une seconde entrée 708 pouvant être optiquement lié à un second télescope.

Dans un mode de réalisation, deux télescopes partagent un même analyseur quantique, de façon dynamique par exemple ou systématiquement. Cela permet de diviser le nombre d'analyseurs quantiques par deux.

La seconde entrée 708 de l'analyseur quantique 704 peut aussi par exemple être optiquement liée à un autre dispositif, tel qu'un dispositif de calibrages ou de tests de l'analyseur quantique 704.

Le récepteur transmet un signal à l'unité de traitement du système. Le signal comprend un signal de détection et le temps d'arrivée estimé par le dateur de photon. L'unité de traitement est alors connectée à chacun des analyseurs quantiques. L'accumulation de bits par l'unité de traitement assure la reconstitution de l'information consécutive à la mesure de l'état de polarisation du photon reçu. L'unité de traitement permet ainsi de traiter les informations reçues pour, par exemple, l'échange de clé de chiffrement ou des communications quantiques déjà chiffrées.

Le fonctionnement de l'analyseur quantique 704 décrit ci-dessus s'applique à un faisceau de plusieurs photons, ainsi qu'à un unique photon transmis pour une communication quantique. Le photon est alors collecté par tous les récepteurs et est détecté par un unique détecteur de photons 704-707 qui effectue la mesure. Ainsi, le photon est divisé par la première lame séparatrice 701 en deux parties, chacune des parties du photon étant orientée vers les séparateurs de faisceau polarisé 702-703 où une nouvelle séparation permet de guider chacune des parties du photon sur les détecteurs de photons 704-707.

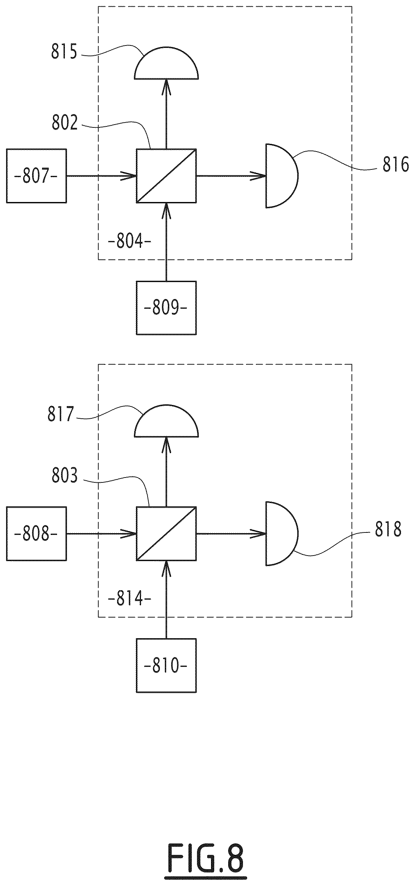

[Fig. 8] La figure 8 est un schéma d'analyseurs quantiques selon un mode de réalisation de l'invention. Deux télescopes 807-808 sont représentés, les télescopes 807 et 808 étant respectivement aux analyseurs quantiques 804 et 814. Les analyseurs quantiques 804 et 814 peuvent nécessiter d'être reliés à un cryostat commun ou des cryostats distincts selon la configuration du système.

Chacun des analyseurs quantiques 804, 814 comprend un séparateur de faisceau polarisé 802-803 et deux détecteurs de photons 815-816 pour l'analyseur quantique 804 et 817-818 pour le second analyseur quantique 814.

Les deux télescopes 807-808 sont issus de deux récepteurs optiques différents ou sont deux télescopes sur une même monture d'un récepteur optique. Les deux analyseurs quantiques 804, 814 étant dépourvus d'un séparateur de faisceau, c'est la séparation physique des télescopes 807-808 et donc des analyseurs quantiques 804, 814 qui joue le rôle de séparateur de faisceau non polarisant.

La fonction d'onde de photons transmis par un satellite est étalée spatialement. La distance entre le télescope 807 et le télescope 808 est un élément séparateur physique qui, avec une certaine probabilité, permet au photon d'être reçu par le télescope 807 ou le télescope 808. De la même manière qu'une lame séparatrice divise un faisceau avec une certaine probabilité de transmission ou de réflexion. L'absence de lame séparatrice n'entrave donc pas la détection des photons par les détecteurs 815-818, et le système selon le mode de réalisation présenté fonctionne de manière similaire au système de la figure 7.

Dans le mode de réalisation de la figure 8, afin d'obtenir les quatre polarisations nécessaires à une transmission optique de photons polarisés tels que décrit par BB84 par exemple, les récepteurs sont regroupés par paires. Ainsi deux récepteurs optiques comprenant chacun un analyseur quantique 804, 814, comprennent ensemble quatre détecteurs de photons 815-818, rendant équiprobables les mesures faites.

Les récepteurs optiques sont alors plus simples à réaliser et moins coûteux, chacun ne comprenant que deux détecteurs de photons 815-818 et un séparateur de faisceau polarisé 802-803.

Les analyseurs quantiques 804-814 comprennent chacun une seconde entrée 809-810 pouvant être optiquement liées à un second télescope.

Dans un mode de réalisation, deux télescopes partagent un même analyseur quantique 804-814, de façon dynamique par exemple ou systématiquement.

La seconde entrée 809-810 permet d'envoyer un signal optique, composé d'un ou plusieurs photons, directement sur le séparateur de faisceau polarisé 803 pour l'analyseur quantique 814, respectivement 802 pour l'analyseur quantique 804.

La seconde entrée 809-810 de l'analyseur quantique 804-814 peut aussi par exemple être optiquement liée à un autre dispositif, tel qu'un dispositif de calibrages ou de tests de l'analyseur quantique 804-814.

Le fonctionnement des analyseurs quantiques 804-814 décrits ci-dessus s'applique à un faisceau de plusieurs photons, ainsi qu'à un unique photon transmis pour une communication quantique. Le photon est alors collecté par tous les récepteurs et est détecté par un unique détecteur de photon 804-807 qui effectue la mesure. Ainsi, le photon est divisé par les séparateurs de faisceau polarisé 802-803 et chacune des parties du photon est guidée sur les détecteurs de photons 804-8s07.

## Revendications

1. Système de réception quantique comprenant un premier récepteur optique (102), le premier récepteur optique (102) comprenant un premier télescope (107), ledit système de réception quantique comprenant de plus un second récepteur optique (102), le second récepteur optique (102) comprenant un second télescope et chaque récepteur optique (102) communiquant à une unité de traitement (103) des signaux détectés et l'unité de traitement (103) combinant les signaux détectés, ledit système de réception quantique étant **caractérisé en ce que** le premier récepteur optique (102) et le second récepteur optique (102) comprennent de plus respectivement une première monture et une seconde monture (110) pour orienter le premier et le second télescope (107) et chaque télescope (107) du système de réception est orienté selon une direction propre de réception de photons.

2. Système de réception quantique selon la revendication 1, le premier récepteur optique (202) comprend de plus un dispositif de pointage, le dispositif de pointage émet un signal (203) à destination d'un satellite (106), le récepteur optique (202) reçoit un signal de pointage (201) du satellite (106) et la monture du télescope du récepteur orientant le télescope (202) selon le signal de pointage (201).

3. Système de réception quantique selon l'une des revendications 1 ou 2, le système comprend de plus un analyseur quantique (104), l'analyseur quantique (104) étant optiquement lié à au moins un des télescopes (107) du système.

4. Système de réception quantique selon l'une des revendications 1 à 3, le système comprend de plus un cryostat (105) pour refroidir un ensemble de détecteurs de photons (704-707, 815-818) partagés par les deux télescopes (102).

5. Système de réception quantique selon l'une des revendications 1 à 4, les télescopes (107) des récepteurs optiques (102) sont équipés d'un système de compensation des perturbations atmosphériques pour la réception des photons.

6. Système de réception quantique selon l'une des revendications 1 à 5, les récepteurs optiques (102) comprennent de plus chacun un système de datation pour la détermination d'une date d'émission et éventuellement la date d'arrivée du photon, le système de datation transmettant la date d'émission et éventuellement la date d'arrivée du photon à l'unité de traitement (103).

7. Système de réception quantique selon l'une des revendications 1 à 6, chaque récepteur optique (602) du système est composé d'au moins deux télescopes (604, 605), les au moins deux télescopes (604, 605) étant chacun associé à un analyseur quantique (601) et à une monture de télescope commune pour les orienter de manière commune.

8. Système de réception quantique selon la revendication 3 ou l'une quelconque des revendications 4 à 7 dans leur dépendance avec la revendication 3, l'analyseur quantique (704, 804, 814) comprend une lame optique (701, 802, 803), la lame optique (701, 802, 803) recevant des photons de deux sources distinctes (707, 708, 807, 809).

9. Système de réception quantique selon la revendication 8, deux récepteurs optiques du système forment une paire, et la lame optique (802, 803) d'un analyseur quantique (804, 814) de la paire est un séparateur de faisceau polarisé, l'analyseur quantique (804, 814) comprend de plus une paire de détecteurs de photons(815-818), le séparateur de faisceau polarisé divisant un faisceau de photons en deux pour diriger des lumières polarisées sur les détecteurs (815-818) de l'analyseur quantique (804, 814).

10. Système de réception quantique selon l'une des revendications 1 à 9, le système comprend un ensemble de récepteurs optiques (102), les récepteurs (102) de l'ensemble étant distants les uns des autres, chacun séparé par une distance prédéterminée (300) et organisés selon un motif en des cercles concentriques.

11. Procédé de réception quantique mis en œuvre par le système de réception quantique selon l'une des revendications 1 à 10, le procédé comprend une étape de pointage et de suivi durant laquelle le premier récepteur (202) émet un signal de pointage (203) vers un satellite et des récepteurs (102) du système étant actifs en réception et reçoivent un signal de pointage (201) de la part du satellite, les télescopes des récepteurs (102) actifs ayant reçu le signal de pointage (203) sont orientés selon le signal de pointage du satellite (203).
